(19) Europäisches Patentamt

European Patent Office

Office européen des brevets

(11) Veröffentlichungsnummer: **0 228 609 B1**

(12) # EUROPÄISCHE PATENTSCHRIFT

(45) Veröffentlichungstag der Patentschrift: **31.07.91**

(21) Anmeldenummer: **86117064.5**

(22) Anmeldetag: **08.12.86**

(51) Int. Cl.⁵: **A61C 1/08**

(54) **Zahnärztliches Handstück mit Untersetzungsgetriebe.**

(30) Priorität: **18.12.85 DE 3544876**

(43) Veröffentlichungstag der Anmeldung:
**15.07.87 Patentblatt 87/29**

(45) Bekanntmachung des Hinweises auf die
Patenterteilung:
**31.07.91 Patentblatt 91/31**

(84) Benannte Vertragsstaaten:
**AT CH DE FR IT LI**

(56) Entgegenhaltungen:
**DE-B- 1 245 245**
**US-A- 2 924 012**

**KEM, April 1983, Seiten 81,82, Leinfelden; K. SCHEKULIN "Exzentergetriebe..."**

**Idem**

(73) Patentinhaber: **Siemens Aktiengesellschaft**
**Wittelsbacherplatz 2**
**W-8000 München 2(DE)**

(72) Erfinder: **Hain, Johann**
**Mühlwiesenweg 5**
**W-6148 Heppenheim-Kirschhausen(DE)**
Erfinder: **Schuss, Werner, Dipl.-Ing.**
**Von-Erthal-Strasse 44**
**W-6148 Heppenheim(DE)**
Erfinder: **Worschischek, Rainer-Karl**
**Magnolienstrasse 57**
**W-6143 Lorsch(DE)**

EP 0 228 609 B1

## Beschreibung

Bei zahnärztlichen Handstücken ist es bekannt, zur Untersetzung der Drehzahl von der antreibenden zur getriebenen Welle, z.B. von der Antriebswelle eines (Elektro- oder Luft-)Motors zur Aufnahmehülse für ein rotierendes Werkzeug, Zahnradschaltgetriebe, die als Vorgelegegetriebe ausgebildet sind, vorzusehen (US-PS 3,436,980). Solche Vorgelegegetriebe sind verhältnismäßig aufwendig und benötigen außerdem relativ viel Platz, so daß das Handstück insbesondere im Durchmesser verhältnismäßig groß und unförmig wird.

In der US-A-2,924,012 ist ein zahnärztliches Handstück mit einem im Handstückgehäuse angeordneten Turbinenantrieb beschrieben, bei dem die Antriebswelle einen exzentrischen Zapfen aufweist, der in einem Stirnrad gelagert ist, welches sich an einem in einer Innenhülse des Handstückgehäuses fest angeordneten Hohlrad abwälzt. Das Stirnrad ist mit einer mit der Antriebswelle fluchtenden Abtriebswelle fest verbunden. Bei dieser Getriebeanordnung führt die Abtriebswelle außer einer Drehbewegung eine Pendelbewegung aus, wenn das Stirnrad sich am feststehenden Hohrad abwälzt. Ein solches Pendeln ist unter anderem aus geräusch- und lagerungstechnischen Gründen unerwünscht. Ein weiterer Nachteil ist darin zu sehen, daß sich bei dieser Getriebeanordnung eine Drehrichtungsumkehr von Antriebs- zur Abtriebswelle ergibt, die insbesondere dann unerwünscht ist, wenn ein Elektromotor, der nur in einer Richtung antreibbar ist, zum Einsatz kommt. Schließlich lassen sich mit der in der Druckschrift aufgezeigten Getriebeanordnung keine ausreichend großen Untersetzungen erzielen.

In der zahnärztlichen Technik ist es weiterhin bekannt, zur Untersetzung der Drehzahl Planetengetriebe vorzusehen. Solche Planetengetriebe können beispielsweise, wie in DE-A-28 03 933 gezeigt, ausgebildet sein. Dort trägt die Antriebswelle am einen Ende ein gezahntes Ritzel und die Antriebswelle am korrespondierenden Ende eine Scheibe. An der Scheibe der Abtriebswelle sind drei Achsen parallel zu der Achse des Antriebswellenritzels angeordnet, welche an den drei Ecken eines gleichseitigen Dreiecks sitzen. Auf jeder dieser drei Wellen sitzt frei drehbar ein Planetenzahnrad, von denen jedes innen mit dem auf der Antriebswelle sitzenden Ritzel und außen mit einer gezahnten, die Planetenräder umgebenden Krone in Eingriff steht. Die Krone ist Bestandteil einer Muffe, die fest in der vorderen Hülse des Handstückgehäuses sitzt.

Ein anderes, hinsichtlich der Funktion jedoch ähnliches Planetengetriebe ist aus der US-41 67 062 bekannt. Dort enthält die Antriebswelle eine Scheibe mit drei außermittig am Umfang der Scheibe gelagerten Planetenrädern, die mit einem fest im Gehäuse angeordneten Kronenrad und mit einem an der Antriebswelle angeordneten Ritzel kämmen. Antriebs- und Abtriebswelle verlaufen zentrisch zueinander, d.h. ihre Achsen liegen in einer Flucht. Mit einem solchen Planetengetriebe ist beispielsweise eine Untersetzung von 4:1 möglich.

Ein sehr viel größeres Untersetzungsverhältnis, beispielsweise in der Größenordnung 15:1 oder 20:1, kann man mit den bekannten Vorgelege- und Planetengetrieben, wenn überhaupt, so nur in mehreren Stufen erreichen, wobei sich aber dabei Handstücklänge und -durchmesser erheblich vergrößern. Eine Unterbringung der Getriebestufen beispielsweise im Halsteil eines Handstücks ist wegen der relativ kleinen Außendurchmesser (weniger als 10 mm) nicht möglich. Die von der Baugröße des Handstückes praktisch vorgegebenen, relativ kleinen Abmessungen werfen auch hinsichtlich der Schmierung der Getriebeteile Probleme auf.

Der im Anspruch 1 angegebenen Erfindung liegt die Aufgabe zugrunde, ein zahnärztliches Handstück zu schaffen, in dem ein Untersetzungsgetriebe mit einer Untersetzung von mehr als 10:1 bei kleinstem Bauvolumen in bezug auf Durchmesser und Länge und unter Sicherstellung einer adäquaten, servicefreundlichen, bei Bedarf leicht durchzuführenden Schmierung der Lager- und Getriebeteile unterzubringen ist.

Das gemäß der Erfindung vorgeschlagene Exzentergetriebe, welches vom Prinzip her beispielsweise aus dem Bericht "Exzentergetriebe..." von Prof. Schekulln (KEM April 1983, Seiten 81/82) bekannt ist, erlaubt es, bisher nicht erreichte Untersetzungsverhältnisse in der Größenordnung von 20:1 und mehr in einem zahnärztlichen Handstück auf sehr platzsparende Weise unterzubringen, wobei durch die Zufuhr von Schmiermittel Lager und Getriebe stärker belastet werden können, als mit einer üblicherweise als Dauerschmierung ausgelegten Einmalschmierung; insbesondere besteht die Möglichkeit, über die Öffnungen bei Bedarf, insbesondere nach einem Sterilisieren des Handstückes, frisches Pflegeöl mit guter Tragfähigkeit problemlos an die sich reibenden Teile (Verzahnung und/oder Lager) heranführen und so den Abtransport bzw. das Auswaschen der Verschleißteile und der verbrauchten Schmierstoffe problemlos bewerkstelligen zu können, ohne daß hierzu separate, das Bauvolumen vergrößernde Schmiermittelleitungen erforderlich wären. Die im Handstückgehäuse patronenartig herausnehmbar gehalterte Hülse macht das Handstück besonders servicefreundlich.

Vorteilhafte Ausgestaltungen der Erfindungen sind in den Unteransprüchen enthalten.

EP 0 228 609 B1

Ein Ausführungsbeispiel der Erfindung wird nachfolgend anhand der Zeichnung näher erläutert.

Es zeigen:

Figur 1    ein zahnärztliches Handstück mit dem erfindungsgemäßen Untersetzungsgetriebe im Längsschnitt,

Figur 2    das Untersetzungsgetriebe nach Figur 1 ohne Handstückgehäuse mit einer modifizierten Getriebeaufnahmehülse.

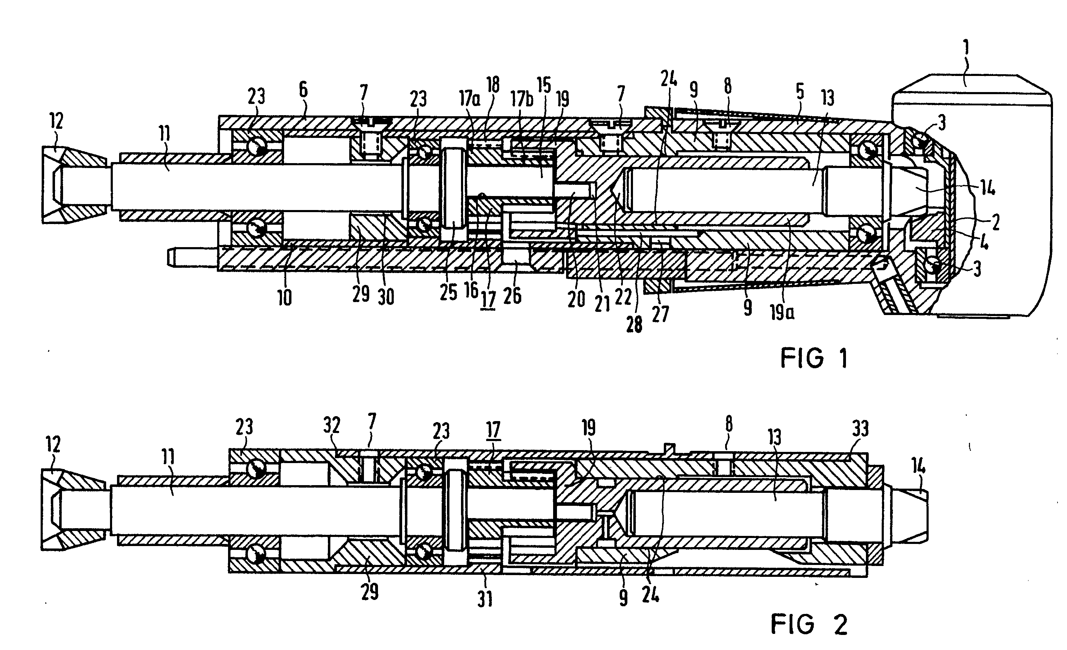

Die Figur 1 zeigt im Längsschnitt ein zahnärztliches Handstück, welches häufig auch als Winkelkopfstück bezeichnet wird. Das Handstück enthält ein Kopfgehäuse 1, in dem in bekannter Weise eine Aufnahmehülse 2 für ein nicht dargestelltes rotierendes Werkzeug (Bohrer, Fräser, od. dgl.) mittels Kugellager 3 gelagert ist. Die Aufnahmehülse 2 ist mit einem Zahnrad 4 verbunden, welches mittels der nachfolgend näher erläuterten Triebwellenanordnung angetrieben wird, die in den sich an das Kopfgehäuse 1 anschließenden Gehäuseabschnitten 5, 6 angeordnet ist. Der sogenannte Halsteil des Handstückes ist fest mit dem Kopfgehäuse 1 verbunden, der sich daran anschließende Abschnitt 6 kann, nach Losen der Befestigungsschrauben 7, von einer im Gehäuseabschnitt 5 mittels Schraube 8 befestigten Innenhülse 9 abgezogen werden. Mit 10 ist eine weitere Innenhülse bezeichnet, die mittels der Befestigungsschrauben 7 im Gehäuseabschnitt 6 gegen Verdrehung und axiales Abgleiten gesichert ist, wobei die eine Schraube gleichsam auch die Innenhülse 9 fixiert.

Die Triebwellenanordnung enthält eine antreibende Welle 11 mit einem Stirnrad 12 am einen Ende, welches mit einem in der Darstellung nicht gezeigten Antriebsteil, z.B. einem Elektro- oder Luftmotor, in Eingriff gebracht werden kann, und eine getriebene Welle 13 mit einem Kegelrad 14 am einen Ende, welches mit dem Zahnrad 4 im Kopfgehäuse 1 kämmt. Die beiden anderen Enden der Wellen 11 und 13 sind durch ein Untersetzungsgetriebe verbunden.

Die antreibende Welle 11 weist hierzu einen exzentrisch angeordneten Zapfen 15 auf, auf dem mittels Gleitlagerung 16 ein Stirnradpaar 17 frei drehbar gelagert ist. Die Gleitlagerung besteht vorteilhafterweise aus einer Paarung von einerseits gehärtetem Stahl für das Doppelstirnrad 17 und andererseits Bronze für die Welle 11 bzw. für den Zapfen 15. Das eine Stirnrad 17a des Stirnpaares wälzt sich an einem an Innenhülse 10 fest angeordneten, vorzugsweise in dieser integrierten, ersten Hohlrad 18 ab. Das andere Stirnrad 17b steht in Eingriff mit einem zweiten Hohlrad 19, welches mit der getriebenen Welle 13 verbunden und damit drehbar im Gehäuse gelagert ist, wobei die Achse dieses Hohlrades mit der Achse der antreibenden Welle 11 fluchtet.

Mit 20 ist ein zentrisch zur Achse 11 angeordneter Führungszapfen bezeichnet, der in einer entsprechenden Bohrung 21 im zweiten Hohlrad 19 gelagert ist und dadurch der Welle 11 eine zusätzliche Abstützung gibt. Das Hohlrad 19 ist mit einem Wellenzapfen 19a versehen, der eine Bohrung 22 aufweist, in die das eine Ende der getriebenen Welle 13 eingepreßt ist.

Die antreibende Welle 11 ist in Kugellagern 23 gelagert, die Lagerung der getriebenen Welle 13 erfolgt mittels einer Gleitlagerung 24 zwischen Wellenzapfen 19a und Innenhülse 9.

Als Ausgleich für eine durch den Exzenterzapfen 15 hervorgerufene Unwucht ist an der Welle 11 ein durch einen Bund 25 gebildeter Ausgleichskörper vorgesehen.

Im Bereich der Getriebeverzahnung und/oder der Gleitlagerung sind Öffnungen 26, 27 und Kanäle 28 vorgesehen, über die Schmiermittel entweder von außen oder über einen Schmiermittelvorrat innerhalb des Handstückes zu den Lagern gebracht werden kann. Damit das Schmiermittel während des Betriebes nicht über die antreibende Welle 11 aus dem Getriebe austreten kann, ist ein Luftführungsteil 29 vorgesehen, welches in der Gehäuseinnenhülse 10 unter Belassung eines geringen Ringspaltes 30 um die Welle 11 angeordnet ist und der Schmierung von außen durch die Bohrung 26 einen Strömungswiderstand entgegensetzt.

Die Verzahnung im Exzentergetriebe erfolgt je nach dem gewünschten Untersetzungsverhältnis, im vorliegenden Falle hat sich eine Untersetzungsstufe von 20:1 als besonders vorteilhaft erwiesen.

Die einzelnen Zähnezahlen stehen in folgender Beziehung zueinander und ergeben das Gesamtübersetzungsverhältnis:

$$i = \frac{z_2 \cdot z_4}{z_2 \cdot z_4 - z_1 \cdot z_3}$$

Wenn sich das eine Stirnrad 17a an dem in der Gehäuseinnenhülse 10 integrierten Hohlrad 18 abwälzt, dreht sich dieses Stirnrad gegenläufig zu der Drehrichtung der antreibenden Welle 11. Das andere Stirnrad

3

17b, welches mit dem Hohlrad 19 in Eingriff steht und sich dort abwälzt, bildet die zweite Untersetzungsstufe. Beide Stufen ergeben nach obiger Beziehung zusammen das gewünschte Untersetzungsverhältnis 20:1.

Die Figur 2 zeigt eine besondere servicefreundliche Ausführung des Untersetzungsgetriebes. Anstelle der beim Ausführungsbeispiel nach Figur 1 relativ kurzen Innenhülse 10 ist bei der in Figur 2 dargestellten Variante eine durchgehende, sowohl antreibende (11) als auch getriebene Welle (13) erfassende Hülse 31 vorgesehen, die patronenartig in das Handstückgehäuse eingeschoben und mittels der Schrauben 7, 8 befestigt wird. Eine Demontage der Getriebeteile ist im entnommenen Zustand dieser Getriebepatrone, die Figur 2 zeigt, denkbar einfach. An der einen Stirnseite der Hülse 31 kann die antreibende Welle 11 zusammen mit den Lagern 23 dem Luftführungsteil 29 und dem Stirnradpaar 17, an der anderen Stirnseite die getriebene Welle 13 mit dem Hohlrad 19 und der Innenhülse 9 axial herausgezogen werden. Die Montage erfolgt analog. An beiden Seiten vorgesehene Anschläge 32, 33 sorgen dafür, daß die Verzahnung sich stets definiert in Eingriff befindet.

**Patentansprüche**

1. Zahnärztliches Handstück, welches eine antreibende Welle (11) und eine getriebene Welle (13) und ein dazwischen angeordnetes Untersetzungsgetriebe enthält, **dadurch gekennzeichnet,** daß unter Verwendung eines an sich bekannten Exzentergetriebes dieses gebildet ist durch einen an der antreibenden Welle (11) exzentrisch angeordneten Zapfen (15), auf dem ein Stirnradpaar (17) drehbar gelagert ist, von dem das eine Stirnrad (17a) sich an einem in einer Innenhülse (10) des Handstücks fest angeordneten ersten Hohlrad (18) und das andere Stirnrad (17b) an einem im Handstück drehbar gelagerten und mit der getriebenen Welle (13) verbundenen zweiten Hohlrad (19) abwälzt, daß im Bereich der Getriebeverzahnung (17 bis 19) die Innenhülse (10) und eine weitere, die Abtriebswelle (11, 13) lagernde Hülse (9) mit Öffnungen (26, 27) zur Zufuhr von Schmiermitteln zu wenigstens einem der Lager (16, 23, 24) der An- und Abtriebswelle (11, 13) und der Getriebeverzahnung versehen sind, und daß die antreibende Welle (11) die getriebene Welle (13) und die dazwischen angeordnete Getriebeverzahnung (17 bis 19) in einer gemeinsamen Hülse (31) angeordnet sind, die patronenartig im Handstückgehäuse (5, 6) herausnehmbar gehaltert ist.

2. Zahnärztliches Handstück nach Anspruch 1, **dadurch gekennzeichnet,** daß die antreibende Welle (11) mittels eines zentrisch angeordneten Führungszapfens (20) in einer Bohrung (21) des zweiten Hohlrades (19) drehbar gelagert ist.

3. Zahnärztliches Handstück nach Anspruch 2, **dadurch gekennzeichnet,** daß die getriebene Welle (13) in einer Bohrung (22) eines am zweiten Hohlrad (19) angeordneten Wellenzapfens (19a) eingepreßt ist.

4. Zahnärztliches Handstück nach einem der Ansprüche 1 bis 3, **dadurch gekennzeichnet,** daß das Stirnradpaar (17) mittels Gleitlagerung (16) am Exzenterzapfen (15) der antreibenden Welle (11) gelagert ist.

5. Zahnärztliches Handstück nach einem der Ansprüche 1 bis 4, **dadurch gekennzeichnet,** daß die die Antriebswelle (13) lagernde weitere Hülse (9) Kanäle (28) aufweist, die mit den Öffnungen (26, 27) für die Zufuhr des Schmiermittels verbunden sind.

6. Zahnärztliches Handstück nach einem der Ansprüche 1 bis 5, **dadurch gekennzeichnet,** daß die antreibende Welle (11) unter Belassung eines geringen Ringspaltes (30) von einem Luftführungsteil (29) umgeben ist.

7. Zahnärztliches Handstück nach einem der Ansprüche 1 bis 6, **dadurch gekennzeichnet,** daß die antreibende Welle (11) mit einem Massenausgleichskörper (25) versehen ist.

8. Zahnärztliches Handstück nach Anspruch 7, **dadurch gekennzeichnet,** daß der Massenausgleichskörper (25) durch einen Bund in der Welle (11) gebildet ist.

9. Zahnärztliches Handstück nach Anspruch 1, **dadurch gekennzeichnet,** daß die Verzahnung ders ersten Hohlrades (18) in die Hülse (31) integriert ist und in die Hülse (31) von der einen Stirnseite die antreibende Welle (11) mit dem Stirnradpaar (17) und von der anderen Seite die getriebene Welle (13) mit dem zweiten Hohlrad (19) axial einsetzbar und im eingesetzten Zustand gegen Verdrehung gesichert ist.

10. Zahnärztliches Handstück nach einem der Ansprüche 1 bis 9, **dadurch gekennzeichnet**, daß das Exzentergetriebe eine Gesamtuntersetzung i = 20 aufweist und im Halsteil eines zahnärztlichen Winkelstückkopfes (Figur 1) angeordnet ist.

## Claims

1. A dental handpiece, which contains a driving shaft (11) and a driven shaft (13) and a reduction gear arranged therebetween,
characterised in that by using an eccentric gear unit, known per se, this reduction gear is formed by a plug (15) arranged on the driving shaft (11) eccentrically, on which a pair of spur gears (17) are mounted in a rotatable manner, the one spur gear (17a) of which moves on on a first hollow wheel (18), arranged in a stationary manner in an inner sleeve (10) of the hand piece, and the other spur gear, (17b) moves on on a second hollow wheel (19), connected to the driven shaft (13), and rotatably mounted in the handpiece, in that in the region of the gear toothing (17 to 19) the inner sleeve (10) and a further sleeve (9), bearing the output shaft (11, 13), are provided with openings (26, 27) for the supply of lubricating means to at least one of the bearings (16, 23, 24) of the drive and output shaft (11, 13) and the gear toothing, and in that the driving shaft (11), the driven shaft (13) and the gear toothing (17 to 19), arranged therebetween, are arranged in a common sleeve (31), which is held like a cartridge in the hand piece housing (5,6) such that it can be removed.

2. A dental handpiece according to claim 1, characterised in that the driving shaft (11) is rotatably mounted by means of a centrally arranged guide plug (20) in a bore (21) of the second hollow wheel (19).

3. A dental handpiece according to claim 2, characterised in that the driven shaft (13) is pressed in a bore (22) of a shaft journal (19a), arranged on the second hollow wheel (19).

4. A dental handpiece according to one of claims 1 to 3, characterised in that the pair of spur gears (17) is mounted, by means of a sleeve bearing, (16) on the eccentric plug (15) of the driving shaft (11).

5. A dental handpiece according to one of claims 1 to 4, characterised in that the further sleeve (9) bearing the drive shaft (13) has channels (28) which are connected to the openings (26, 27) for the supply of the lubricating means.

6. A dental handpiece according to one of claims 1 to 5, characterised in that the driving shaft (11) is surrounded by an air guide part (29) leaving a slight annular gap (30).

7. A dental handpiece according to one of claims 1 to 6, characterised in that the driving shaft (11) is provided with a counterbalance body (25).

8. A dental handpiece according to claim 7, characterised in that the counterbalance body (25) is formed by a collar in the shaft (11).

9. A dental handpiece according to claim 1, characterised in that the toothing of the first hollow wheel (18) is integrated into the sleeve (31) and the driving shaft (11) with the pair of spur gears is able to be inserted axially into the sleeve (31) from the one end side and from the other side the driven shaft (13) with the second hollow wheel (19) is able to be inserted axially and ensured against twisting in the inserted state.

10. A dental handpiece according to one of claims 1 to 9, characterised in that the eccentric gear has a total reduction of i = 20 and is arranged in the neck part of a dental pipe angle head (Figure 1).

## Revendications

1. Pièce à main de dentisterie, qui comporte un arbre d'entraînement (11) et un arbre mené (13) et une transmission démultiplicatrice disposée entre ces arbres, caractérisée par le fait que, dans le cas de l'utilisation d'un mécanisme à excentrique connu en soi, ce mécanisme est formé par un téton (15), disposé de façon excentrée sur l'arbre d'entraînement (11) et sur lequel est monté, de manière à pouvoir tourner, un couple de pignons droits (17), parmi lesquels le pignon droit (17a) roule sur une première couronne (18) montée fixe dans une douille intérieure (10) de la pièce à main et l'autre pignon droit (17a) roule sur une seconde couronne (19) montée de façon à pouvoir tourner dans la pièce à main et raccordée à l'arbre mené (13), que la douille intérieure (10) et une autre douille (9), dans laquelle est tourillonné l'arbre mené (11,13) et qui comporte des ouvertures (26,27) servant à amener des moyens de lubrification à au moins l'un des paliers (16,23,24) de l'arbre d'entraînement et de l'arbre mené (11,13) à la denture (17 à 19) du mécanisme, sont prévus, dans la zone de cette denture, et que l'arbre d'entraînement (11), l'arbre mené (13) et la denture intercalée (17 à 19) du mécanisme sont disposés dans une douille commune (31), qui est maintenue, de manière à pouvoir en être extraite, à la manière d'une cartouche, dans le carter (5,6) de la pièce à main.

2. Pièce à main de dentisterie suivant la revendication 1, caractérisée par le fait que l'arbre d'entraînement (11) est monté, de manière à pouvoir tourner, au moyen d'un téton centré de guidage (20) dans un perçage (21) de la seconde couronne (19).

3. Pièce à main de dentisterie suivant la revendication 2, caractérisée par le fait que l'arbre entraîné (13) est inséré à force dans un perçage (22) d'un bout d'arbre (19a) disposé sur la seconde couronne (19).

4. Pièce à main de dentisterie suivant les revendications 1 à 3, caractérisée par le fait que le couple (17) de pignons droits est supporté, au moyen d'un palier lisse (16), sur le téton d'excentrique (15) de l'arbre d'entraînement (11).

5. Pièce à main de dentisterie suivant l'une des revendications 1 à 4, caractérisée par le fait que l'autre douille (9), qui supporte l'arbre d'entraînement (13), comporte des canaux (28) raccordés aux ouvertures (26,27) pour l'amenée de l'agent de lubrification.

6. Pièce à main de dentisterie suivant l'une des revendications 1 à 5, caractérisée par le fait que l'arbre d'entraînement (11) est entouré, en dehors d'une petite fente annulaire (30), par un élément (29) de guidage de l'air.

7. Pièce à main de dentisterie suivant l'une des revendications 1 à 6, caractérisée par le fait que l'arbre d'entraînement (11) comporte un corps (25) d'équilibrage des masses.

8. Pièce à main de dentisterie suivant la revendication 7, caractérisée par le fait que le corps (25) d'équilibrage des masses est formé par un collet présent sur l'arbre (11).

9. Pièce à main de dentisterie suivant la revendication 1, caractérisée par le fait que la denture de la première couronne (18) est intégrée dans la douille (31) et que l'arbre d'entraînement (11) muni du couple (17) de pignons droits peut être inséré axialement dans la douille (31), à partir d'une face frontale, et que l'arbre mené (13) équipé de la seconde couronne (19) peut être inséré axialement dans la douille, à partir de l'autre côté et est bloqué contre toute rotation à l'état inséré.

10. Pièce à main de dentisterie suivant l'une des revendications 1 à 9, caractérisée par le fait que le mécanisme d'excentrique possède une démultiplication totale i = 20 et qu'une tête de pièce à main coudée (figure 1) est disposée dans la partie en forme de col.

FIG 1

FIG 2